# EUROPEAN PATENT APPLICATION

(11) **EP 4 517 944 A1**
(43) Date of publication of application: **05.03.2025**
(21) Application number: 24197106.8
(22) Date of filing: 28.08.2024
(51) Int. Cl.: H01M 50/103, H01M 50/342

(54) **BATTERY CELL**

(30) Priority: 28.08.2023 KR 20230112943
(71) Applicant: SK On Co., Ltd., Seoul 03161 (KR)
(72) Inventor: KWAK, Seung Ho, 34124 Daejeon (KR); JU, Seung Hoon, 34124 Daejeon (KR)
(74) Representative: Stolmár & Partner Patentanwälte PartG mbB

(57) **Abstract**

A battery cell of the present disclosure includes: an electrode assembly including a cathode, an anode, and a separator; and an exterior material accommodating the electrode assembly therein and including a notch portion in a present notch area, wherein the notch portion includes: a first notch portion having a present thickness; and a second notch portion intersecting an end of the first notch portion to form a first intersection point, intersecting the other end opposite to the first notch portion to form a second intersection point, and having a thickness different from the first notch portion.

## Description

### BACKGROUND OF THE INVENTION

### 1. Field

The present disclosure relates to a battery cell. Specifically, it relates to a battery cell having a notch portion.

### 2. Description of the Related Art

A secondary battery is a battery that is made to convert electrical energy into chemical energy and store it so that it may be reused multiple times through charging and discharging. Secondary batteries are widely used across industries due to their economical and eco-friendly characteristics. In particular, among secondary batteries, lithium secondary batteries are widely used throughout industries, including portable devices that require high-density energy.

The operating principle of lithium secondary batteries is an electrochemical oxidation-reduction reaction. In other words, the principle is that electricity is generated through the movement of lithium ions and charged in the reverse process. In the case of a lithium secondary battery, a phenomenon in which lithium ions in an anode escape therefrom and move to a cathode through an electrolyte and a separator is referred to as discharge. In addition, the opposite process of this phenomenon is referred to as charging.

As the process of charging and discharging a secondary battery is repeated, a swelling phenomenon in which the internal pressure is increased and a large amount of heat is generated may occur. Since this swelling phenomenon may lead to explosion or fire, a method for controlling the internal pressure of secondary batteries is required.

### SUMMARY OF THE INVENTION

A problem that the present disclosure aims to solve is to provide a battery cell in which the internal pressure is controlled to exhibit improved stability.

In addition, another problem that the present disclosure aims to solve is to provide a battery cell in which a notch portion is smoothly opened.

In addition, the battery cell of the present disclosure can be widely applied in the field of electric vehicles, battery charging stations, and green technology, such solar power generation, and wind power generation using batteries. In addition, the battery cell of the present disclosure can be used in eco-friendly electric vehicles, hybrid vehicles, etc. to prevent climate change by suppressing air pollution and greenhouse gas emissions.

A battery cell of the present disclosure includes: an electrode assembly including a cathode, an anode, and a separator; and an exterior material accommodating the electrode assembly therein and including a notch portion in a present notch area, wherein the notch portion includes: a first notch portion having a present thickness; and a second notch portion intersecting an end of the first notch portion to form a first intersection point, intersecting the other end opposite to the first notch portion to form a second intersection point, and having a thickness different from the first notch portion.

The second notch portion may have a thickness thinner than that of the first notch portion.

The first notch portion may become thicker from the first intersection point toward a central portion formed between the first intersection point and the second intersection point and may become thinner from the central portion toward the second intersection point.

The first notch portion may include a step.

The first notch portion may be formed to extend along one direction within the notch area.

The first notch portion may be provided in a V-shape within the notch area.

The second notch portion may include a first sub-notch portion forming the first intersection point and a second sub-notch portion forming the second intersection point, and the first sub-notch portion may become thinner away from the first intersection point, and the second sub-notch portion may become thinner away from the second intersection point.

The first sub-notch portion may be formed symmetrically with the second sub-notch portion based on the first notch portion.

The second notch portion may be formed to be curved.

The second notch portion may have a bent shape each at the first intersection point and the second intersection point.

The second notch portion may be formed closer to an edge of the notch area than the first notch portion.

The first notch portion may be connected to the second notch portion to form a "U"-shape.

A problem that the present disclosure aims to solve is to provide a battery cell in which the internal pressure is controlled to exhibit improved stability.

In addition, another problem that the present disclosure aims to solve is to provide a battery cell in which a notch portion is smoothly opened.

### BRIEF DESCRIPTION OF THE DRAWINGS

FIG. 1 shows a battery cell according to one embodiment of the present disclosure.
FIG. 2 shows an exploded view of a battery cell according to one embodiment of the present disclosure.
FIG. 3 shows a notch portion according to one embodiment of the present disclosure.
FIGS. 4 to 6 show cross-sections along AA' direction of FIG. 3.
FIG. 7 shows a notch portion according to another embodiment of the present disclosure.
FIG. 8 shows a cross-section along BB' direction of FIG. 7.
FIGS. 9A to 9D show various embodiments of a notch portion of the present disclosure.

### DETAILED DESCRIPTION

Hereinafter, the present disclosure will be described in detail with reference to the attached drawings. This is merely illustrative, and the present disclosure is not limited to the specific embodiments described in an illustrative manner.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

To explain the present disclosure, it will be described below based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for explanation so that the present disclosure may be clearly understood, and of course, the directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

As used in this specification, singular expressions include plural expressions unless the context clearly dictates otherwise.

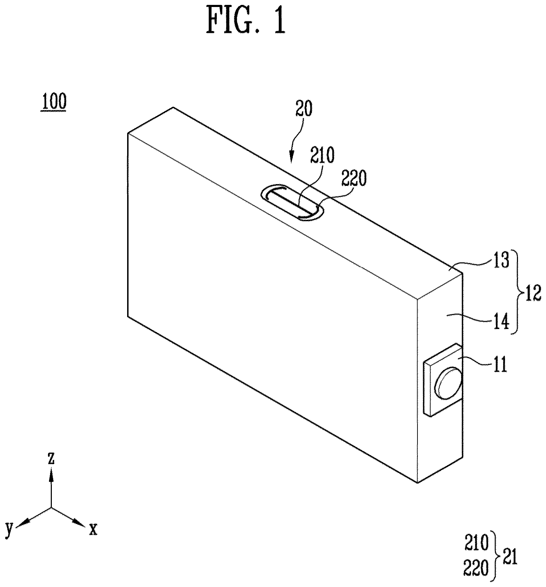

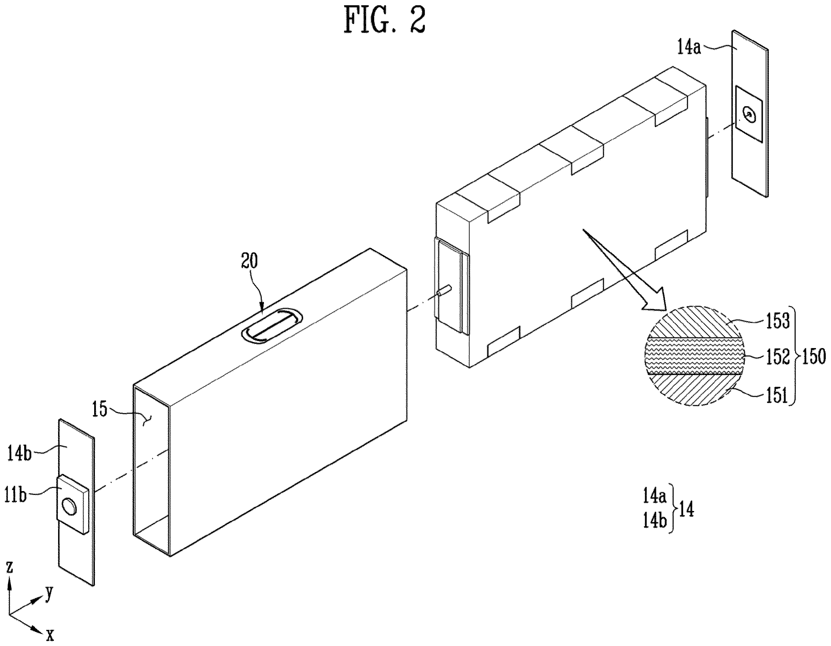

FIG. 1 shows a battery cell 100 according to one embodiment of the present disclosure, and FIG. 2 shows an exploded view of a battery cell 100 according to one embodiment of the present disclosure.

A battery cell 100 described in the present specification refers to a secondary battery that may be repeatedly used by charging and discharging electrical energy. For example, it may be a lithium secondary battery, but is not limited thereto.

Battery cells 100 may be classified into a pouch-type secondary battery, a prismatic secondary battery, or a cylindrical secondary battery depending on the shape. Referring to FIG. 1, in the present specification, a prismatic secondary battery is shown as an example for convenience of explanation, but the present invention is not limited thereto.

A battery cell 100 of the present disclosure includes: an electrode assembly including a cathode, an anode, and a separator; and an exterior material 12 accommodating the electrode assembly therein and including a notch portion 21 in a present notch area 20, wherein the notch portion 21 includes: a first notch portion 210 having a present thickness; and a second notch portion 220 intersecting an end of the first notch portion 210 to form a first intersection point P1, intersecting the other end opposite to the first notch portion 210 to form a second intersection point P2, and having a thickness different from the first notch portion 210.

A battery cell 100 includes an electrode assembly. Referring to FIG. 2, an electrode assembly may include a cathode 151, an anode 153, and a separator 152. Depending on the manner in which a cathode 151, an anode 153, and a separator 152 are stacked, electrode assemblies may classified into a stacking type, a winding type, a stack-folding type, and a Z-stacking type.

The type of electrode assembly included in a battery cell 100 of the present disclosure is not limited. In other words, an electrode assembly included in a battery cell 100 of the present disclosure may be an electrode assembly manufactured in any one of a stacking type, a winding type, a stack-folding type, and a Z-stacking type.

A cathode 151 and an anode153 may include a current collector. A cathode 151 may include a cathode current collector, and an anode 153 may include an anode current collector. A current collector may include a known conductive material to an extent that it does not cause a chemical reaction within a lithium secondary battery. For example, a current collector may include any one of stainless steel, nickel (Ni), aluminum (Al), titanium (Ti), copper (Cu), and alloys thereof, and may be provided in various forms such as a film, a sheet, a foil, and the like.

A cathode 151 and an anode 153 may include an active material. A cathode 151 may include a cathode active material, and an anode 153 may include an anode active material. A cathode active material may be a material which lithium ions may be inserted into and extracted from. An anode active material may be a material which lithium ions may be adsorbed into and extracted from. For example, a cathode active material may be a lithium metal oxide, and an anode active material may be any one of a carbon-based material such as crystalline carbon, amorphous carbon, carbon composite, and carbon fiber, a lithium alloy, silicon (Si), and tin (Sn).

In addition, a cathode 151 and an anode 153 may each further include a binder and a conductive material to improve mechanical stability and electrical conductivity.

A separator 152 may be formed to prevent an electrical short circuit between a cathode 151 and an anode 153 and to generate a flow of ions. The type of a separator is not particularly limited, but may include a porous polymer film. For example, a separator may include a porous polymer film or a porous nonwoven fabric.

An electrolyte may include an electrolyte solution. An electrolyte may be a non-aqueous electrolyte. An electrolyte may include a lithium salt and an organic solvent. An electrolyte may further include an additive. An additive may form a film on a cathode or an anode through a chemical reaction inside a battery. For example, it may form a cathode interfacial film on a cathode and an anode interfacial film on an anode.

Referring to FIG. 2, an exterior material 12 may accommodate an electrode assembly therein. An exterior material 12 may accommodate an electrode assembly and an electrolyte solution therein. An exterior material 12 may include an external insulating layer and an internal adhesive layer made of a polymer material and a metal layer interposed between the external insulating layer and the internal adhesive layer. An exterior material 12 may include a material with high mechanical rigidity to protect a battery cell 100 from external shock. For example, a case may include an aluminum layer.

An exterior material 12 may include a body portion 13 accommodating an electrode assembly and cap portions 14a and 14b covering the body portion 13. A cap portion 14 may include a cell tab 11 electrically connecting an electrode assembly to the outside.

Referring to FIG. 2, a body portion 13 may include an open opening portion 15. A body portion 13 may be open on both sides. Referring to FIG. 2, both sides of a body portion 13 may be open toward the Y-direction. An electrode assembly and an electrolyte may be accommodated inside an exterior material 12 through an opening portion 15. For example, an opening portion 15 may be provided in a hexahedral shape so that both sides are open along the Y-direction. A cap portion 14 may cover both open surfaces of a body portion 13. A body portion 13 and a cap portion 14 may be combined to close an accommodation space of an exterior material 12.

Cap portions 14a and 14b may cover a body portion 13. In other words, cap portions 14a and 14b may cover both open surfaces of a body portion 13 to protect components accommodated within a body portion 13. A body portion 13 and cap portions 14a and 14b may be coupled or sealed each other.

A battery cell 100 may further include a cell tab 11 protruding outside an exterior material 12 for electrical connection to the outside. A cell tab 11 may be provided on a cap portion 14. A battery cell 100 may include a plurality of cap portions 14a and 14b and a plurality of cell tabs 11a and 11b. Each cell tab 11a and 11b may be provided on a plurality of cap portions 14a and 14b.

A cell tab 11 may be connected to each of a cathode and an anode of a battery cell 100. A cell tab 11 may include a cathode tab 11a connected to a cathode and an anode tab 11b connected to an anode.

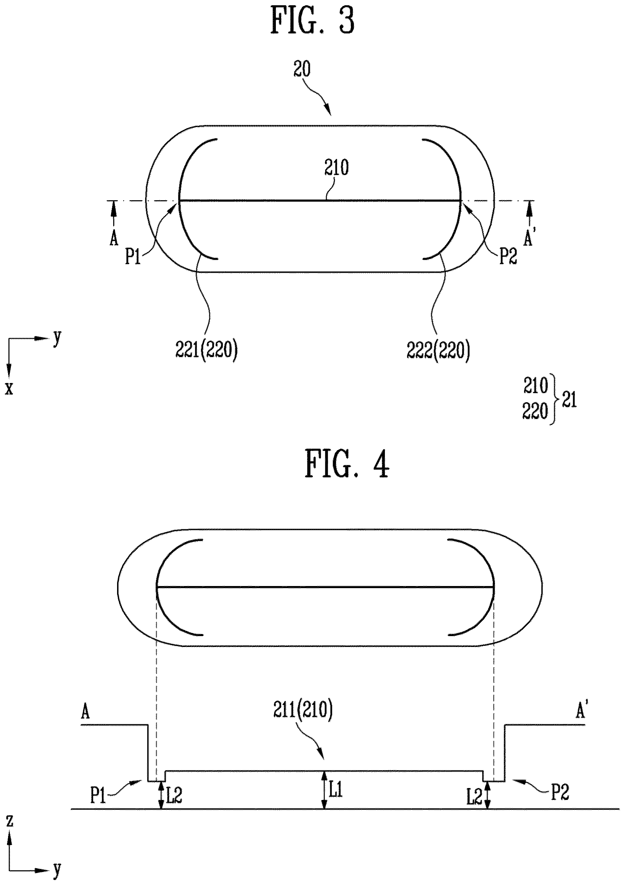

FIG. 3 shows a notch portion according to one embodiment of the present disclosure.

A notch portion 21 includes a first notch portion 210 and a second notch portion 220. A first notch portion 210 may have a preset thickness. The thickness of a notch portion 21 refers to the length along the thickness direction of an exterior material 12. For example, referring to FIG. 1 again, the thickness of a notch portion 21 means the length of the notch portion 21 along the Z-direction.

The internal pressure of a battery cell 100 may be adjusted by a notch portion 21. A battery cell 100 may be used multiple times by repeatedly charging and discharging. The internal pressure of a battery cell 100 may increase due to a gas generated during this process. When the gas is left unattended without discharging the gas, the battery cell 100 may explode. Therefore, in order to use a battery cell 100 safely, it is necessary to properly adjust the pressure of the battery cell 100.

A notch 21 may be provided on one side of an exterior material 12 to allow a gas to be discharged through the notch portion 21. In other words, the shape of a notch portion 21 may change based on the internal pressure of an exterior material 12. A notch portion 21 may be formed in a preset notch area 20 of an exterior material 12. A notch area 20 may be any area of an exterior material 12. For example, a notch area 20 may be positioned in a body portion 13 or a cap portion 14.

Specifically, when the internal pressure of an exterior material 12 increases and reaches a fracture pressure, a notch portion 21 may be opened. Fracture pressure refers to a pressure at which a notch portion 21 may be fractured and opened. Therefore, when the internal pressure of an exterior material 12 is lower than a fracture pressure, the shape of a notch portion 21 will be maintained. When the internal pressure of an exterior material 12 increases above a fracture pressure through continuous use of a battery cell 100, the shape of a notch portion 21 may change. A notch portion 21 may be opened and an internal gas may be discharged to the outside, which may cause the internal pressure to decrease.

A notch portion 21 may be fractured even at a relatively low pressure compared to other areas of a battery cell 100. Through this, damage to a battery cell 100 may be prevented. Areas other than a notch portion 21 of a battery cell 100 may be prevented from being fractured.

However, a notch portion 21 may not be opened smoothly. This is because a stress due to expansion of an exterior material 12 acts unevenly on a notch portion 21. For example, only a part of a notch portion 21 may be opened.

The present disclosure may include a first notch portion 210 and a second notch portion 220 having different thicknesses. A first notch portion 210 and a second notch portion 220 may have different thicknesses to prevent a stress from being concentrated in an arbitrary area. Through this, a notch portion 21 may be opened smoothly to allow a gas to be discharged efficiently.

Referring to FIG. 3, a first notch portion 210 and a second notch portion 220 may intersect to form a first intersection point P1 and a second intersection point P2. A first notch portion 210 and a second notch portion 220 may have different thicknesses.

A second notch portion 220 may have a thinner thickness than that of a first notch portion 210. The durability of a notch portion 21 may vary depending on the thickness of the notch portion 21. The thinner a notch portion 21 is, the weaker its durability may be. Because of this, a second notch portion 220 may be opened even in a lower pressure environment than a first notch portion 210.

Specifically, a first notch portion 210 may be formed to extend along one direction within a notch area 20. For example, referring to FIG. 3, a first notch portion 210 may be formed to extend along the Y-direction. When the internal pressure of an exterior material 12 increases, only a central portion 211 of a first notch portion 210 may be fractured, and an edge area may not be fractured. When a second notch portion 220 is provided to be thinner than a first notch portion 210, both the first notch portion 210 and the second notch portion 220 may be opened.

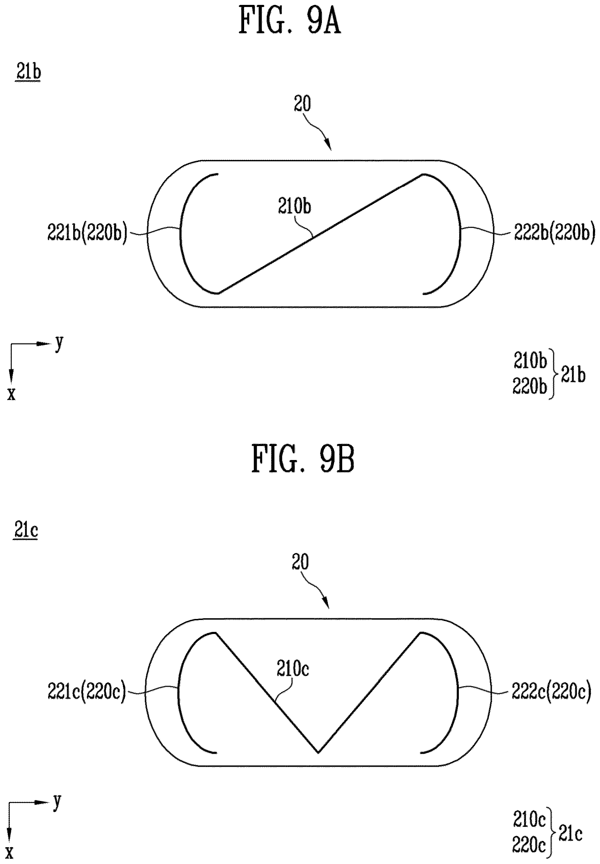

In another embodiment, a first notch portion 210 may be provided in a V-shape within a notch area 20. The shape of a first notch portion 210 and a second notch portion 220 will be described in detail later with reference to FIGS. 9A to 9D.

A second notch portion 220 may be formed to intersect one end and the other end of a first notch portion 210. A second notch portion 220 may be formed to be curved. A second notch portion 220 may include a first sub-notch portion 221 and a second sub-notch portion 222. A first sub-notch portion 221 may intersect one end of a first notch portion 210 to form a first intersection point P1. A second sub-notch portion 222 may intersect with the other end opposite to one end of a first notch portion 210 to form a second intersection point P2. A first sub-notch portion 221 and A second sub-notch portion 222 may each be formed to be curved.

A first sub-notch portion 221, a second sub-notch portion 222, and a first notch portion 210 may be formed to be connected to each other. Through this, when any one area of a notch portion 21 is opened, one area of an adjacent notch portion 21 may be smoothly opened by the opening pressure.

A first sub-notch portion 221 may be formed symmetrically with a second sub-notch portion 222 based on a first notch portion 210. Through this, a stress may be evenly applied to a notch portion 21 so that a notch portion may be opened smoothly.

FIGS. 4 to 6 show cross-sections along AA' direction of FIG. 3.

FIG. 4 shows a cross-section of a notch portion 21 according to one embodiment of the present disclosure. The thickness of a first notch portion 210 may be thicker than the thickness at a first intersection point P1 and a second intersection point P2. In other words, the thickness at a first intersection point P1 and a second intersection point P2 may be thinner than the thickness of a first notch portion 210.

A central portion 211 of a first notch portion may receive a concentrated stress. In other words, a central portion 211 of a first notch may be opened first. A central portion 211 of a first notch 210 may be opened as if two opposing surfaces are split along a direction toward a first intersection point P1 and a second intersection point P2.

By increasing the thickness of a central portion 211 receiving a concentrated stress, a notch portion may be prevented from being opened below a fracture pressure. In addition, opening may begin from a central portion 211, and a notch portion may be induced to be completely opened.

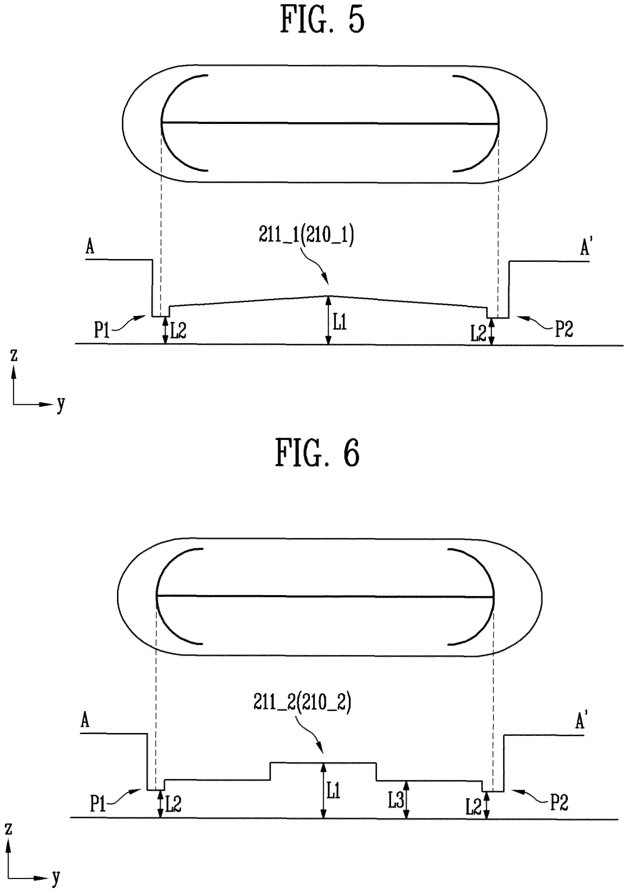

FIG. 5 shows a cross-section of a notch portion 21 according to another embodiment of the present disclosure. Referring to FIG. 5, a first notch portion 210_1 may become thicker from a first intersection point P1 toward a central portion 211_1 formed between the first intersection point P1 and a second intersection point P2, and it may become thinner from the central portion 211_1 toward the second intersection point P2. In an embodiment, the thickness L2 at a first intersection point may be the same as the thickness L2 at a second intersection point. The thickness L1 of a central portion may be thicker than the thickness L2 at a first intersection point and the thickness L2 at a second intersection point.

FIG. 6 shows a cross-section of a notch portion 21 according to another embodiment of the present disclosure. A first notch portion 211_2 may include a step. Referring to FIG. 6, a first notch portion 211_2 may form a stepped structure whose thickness increases from a first intersection point P1 and a second intersection point P2 toward a central portion. For example, the thickness L1 of a central portion, the thickness L3 between the central portion and a second intersection point, and the thickness L2 at the second intersection point may be different. The thickness may become thinner in an order from the thickness of a central portion to the thickness between the central portion and a second intersection point and then the thickness at the second intersection point.

Through this, the durability of a first notch portion 210 may be improved. In other words, a first notch portion 210 may be prevented from being opened below a fracture pressure of an exterior material 12.

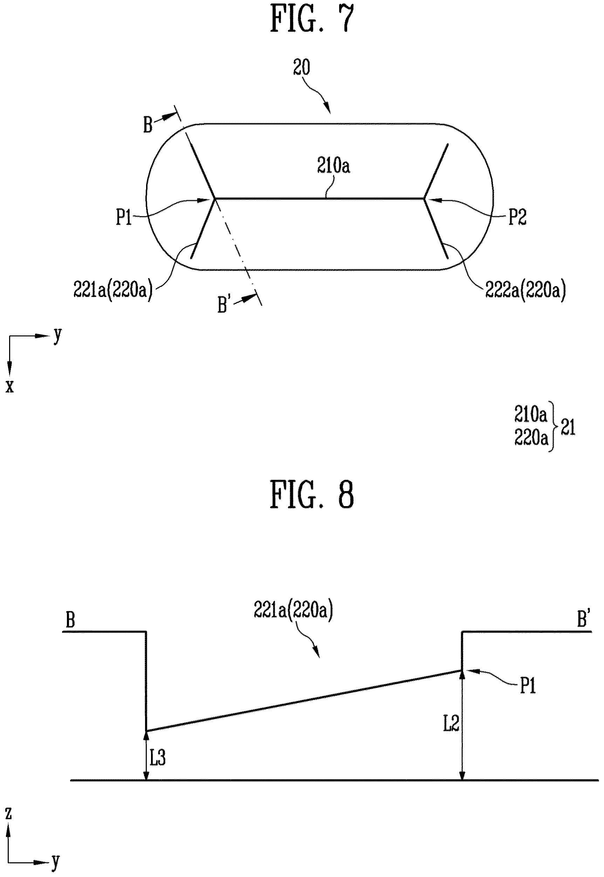

FIG. 7 shows a notch portion 21 according to another embodiment of the present disclosure, and FIG. 8 shows a cross-section along BB' direction of FIG. 7.

Referring to FIG. 7, a second notch portion 220 may be provided in a bent shape each at a first intersection point P1 and a second intersection point P2. Specifically, a first sub-notch portion 221a may be bent at a first intersection point P1, and a second sub-notch portion 222a may be bent at a second intersection point P2. Through this, a notch portion 21 may be opened efficiently. A second notch portion 220a may be formed closer to an edge of a notch area 20 than a first notch portion 210a.

The thickness of a first sub-notch portion 221a may become thinner away from a first intersection point P1. A second sub-notch portion 222a may become thinner away from a second intersection point P2. That a first sub-notch portion 221a is away from a first intersection point P1 means that the first sub-notch portion 221a is away from the first intersection point P1 along a direction in which the first sub-notch portion 221a extends. In addition, that a second sub-notch portion 222a is away from a second intersection point P2 means that the second sub-notch portion 222a is away from the second intersection point P2 along a direction in which the second sub-notch portion 222a extends.

Ultimately, a first sub-notch portion 221a and a second sub-notch portion 222a may each form an inclined surface. For example, referring to FIG. 8, the thickness L2 at a first intersection point P1 may be thicker than the thickness L3 of the other end of a first sub-notch portion 221a. An inclined surface may be formed such that the thickness becomes thinner along a direction from a first intersection point P1 to the other end of a first sub-notch portion 221a.

FIGS. 9A to 9D show various embodiments of a notch portion 21 of the present disclosure.

The shape of a notch portion 21 is not limited as long as it may be opened when the internal pressure of an exterior material 12 increases. Referring to FIG. 9A, a first notch portion 210b may extend diagonally across a notch area 20. A second notch portion 220b may be connected to each of one end and the other end of a first notch portion 210 and may be formed to be curved.

Referring to FIG. 9B, a first notch portion 210c may be provided in a V-shape within a notch area 20. A first sub-notch portion 221c may be connected to one end of a first notch portion 210c, and a second sub-notch portion 222c may be connected to the other end of a first notch portion.

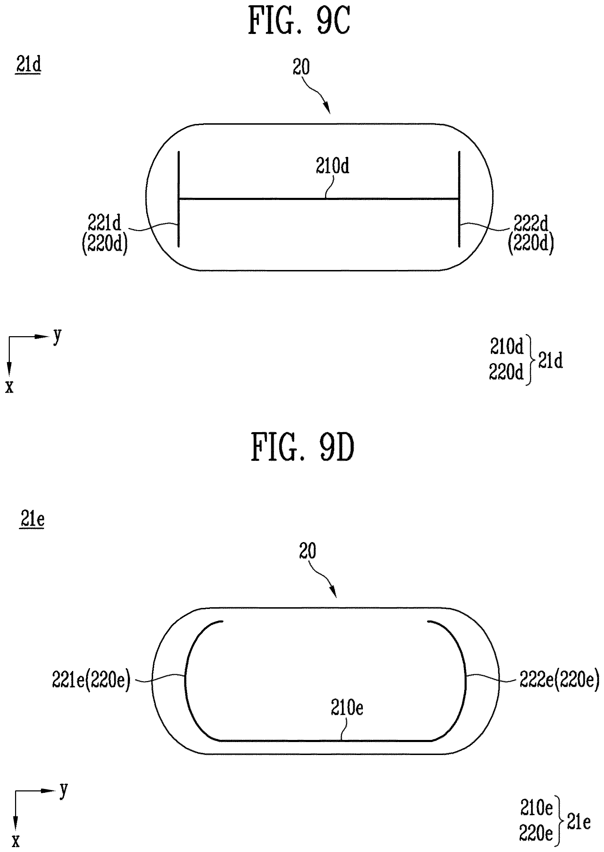

Also, referring to FIG. 9C, a second notch portion 220d may be provided in a linear shape. A first sub-notch portion 221d and a second sub-notch portion 222d may each be provided linearly. An intersection point may be formed in a central area of a first sub-notch portion 221d, and an intersection point may be formed in a central area of a second sub-notch portion 222d. In addition, referring to FIG. 9D, a first notch portion 210e and a second notch portion 220e may be connected to each other to form a "U"-shape.

The present disclosure may be modified and implemented in various forms, and its scope is not limited to the embodiments described above. Therefore, if a modified embodiment includes components of the present disclosure, it should be regarded as falling within the scope of the rights of the present disclosure.

## Claims

1. A battery cell comprising:
an electrode assembly including a cathode, an anode, and a separator; and
an exterior material accommodating the electrode assembly therein and including a notch portion in a present notch area;
wherein the notch portion includes:
a first notch portion having a present thickness; and
a second notch portion intersecting an end of the first notch portion to form a first intersection point, intersecting the other end opposite to the first notch portion to form a second intersection point, and having a thickness different from the first notch portion.

2. The battery cell according to claim 1, wherein the second notch portion has a thickness thinner than that of the first notch portion.

3. The battery cell according to any one of the preceding claims, wherein the first notch portion becomes thicker from the first intersection point toward a central portion formed between the first intersection point and the second intersection point and becomes thinner from the central portion toward the second intersection point.

4. The battery cell according to any one of the preceding claims, wherein the first notch portion includes a step.

5. The battery cell according to claim 3, wherein the first notch portion is formed to extend along one direction within the notch area.

6. The battery cell according to any one of the preceding claims, wherein the first notch portion is provided in a V-shape within the notch area.

7. The battery cell according to any one of the preceding claims, wherein the second notch portion includes a first sub-notch portion forming the first intersection point and a second sub-notch portion forming the second intersection point, wherein the first sub-notch portion becomes thinner away from the first intersection point, and the second sub-notch portion becomes thinner away from the second intersection point.

8. The battery cell according to claim 7, wherein the first sub-notch portion is formed symmetrically with the second sub-notch portion based on the first notch portion.

9. The battery cell according to any one of the preceding claims, wherein the second notch portion is formed to be curved.

10. The battery cell according to any one of the preceding claims, wherein the second notch portion has a bent shape each at the first intersection point and the second intersection point.

11. The battery cell according to any one of the preceding claims, wherein the second notch portion is formed closer to an edge of the notch area than the first notch portion.

12. The battery cell according to any one of the preceding claims, wherein the first notch portion is connected to the second notch portion to form a "U"-shape.
